# Europäisches Patentamt
## European Patent Office
## Office européen des brevets

(19)

(11) Veröffentlichungsnummer: **0 051 160**
**B1**

(12) 
# EUROPÄISCHE PATENTSCHRIFT

(45) Veröffentlichungstag der Patentschrift:
23.07.86

(51) Int. Cl.⁴: **B 60 K 17/22**

(21) Anmeldenummer: **81108015.9**

(22) Anmeldetag: **07.10.81**

(54) Antriebseinrichtung.

(30) Priorität: **17.10.80 US 198076**

(43) Veröffentlichungstag der Anmeldung:
**12.05.82 Patentblatt 82/19**

(45) Bekanntmachung des Hinweises auf die Patenterteilung:
**23.07.86 Patentblatt 86/30**

(84) Benannte Vertragsstaaten:
**DE FR GB IT**

(56) Entgegenhaltungen:
**DE-A-2 706 066**
**DE-A-2 718 861**
**FR-A-641 100**
**FR-A-2 222 895**
**FR-A-2 263 417**
**US-A-1 867 061**
**US-A-3 038 346**
**US-A-3 785 023**

(73) Patentinhaber: **DEERE & COMPANY, 1 John Deere Road, Moline Illinois 61265 (US)**

(72) Erfinder: **Jacklin, Roger Layton, 1730 Glenny Ave, Waterloo Iowa 50702 (US)**

(74) Vertreter: **Lins, Edgar, Dipl.- Phys., Patentanwälte Gramm + Lins Theodor- Heuss- Strasse 2, D-3300 Braunschweig (DE)**

EP 0 051 160 B1

## Beschreibung

Die Erfindung betrifft eine Antriebseinrichtung, bestehed aus einer Welle, die an ihrem einen Ende ein spiralverzahntes Ritzel trägt, das mit einem Spiralzahnkegelrad kämmt; einem Lager für axiale und radiale Belastung, dessen innerer Laufring fest auf der genannten Welle sitzt und so die aus dem genannten Zahnradeingriff resultierende, zum anderen Ende der Welle gerichtete Längsschubkraft aufnimmt, wobei zwischen dem inneren Laufring und einem Äußeren Laufring Rollkörper angeordnet sind; und aus einer stillstehenden Tragkonstruktion zur Aufnahme des genannten Lagers.

Eine derartige Ausführungsform läßt sich der US-A-2,908,380 entnehmen. Wird z.B. ein Fahrzeug mit der vorstehend beschriebenen Antriebseinrichtung versehen, dann tritt während der Fahrt die vorstehend genannte Längsschubkraft auf. Diese Antriebseinrichtungen sind z.B. in landwirtschaftlichen oder Industrie-Fahrzeugen eingebaut, wobei das Spiralzahnkegelrad in dem Gehäuse auf einer quer und horizontal angeordneten Achse sitzt. Wirkt der Antrieb auf die Hinterräder des Fahrzeuges, ist die genannte Längsschubkraft nach vorn gerichtet. Bisher ist es üblich, dieser Längsschubkraft dadurch Rechnung zu tragen, daß die gesamte Konstruktion schwerer und stabiler und aus teueren Materialien hergestellt wird. Der Erfindung liegt die Aufgabe zugrunde, die eingangs erläuterte Antriebseinrichtung hinsichtlich der Herstellungskosten zu verbessern.

Diese Aufgabe wird erfindungsgemäß dadurch gelöst, daß die Tragkonstruktion mit einer Abstützung gegen die dem Ritzel abgewandte Stirnfläche (vordere Stirnfläche) des Äußeren Laufringes anliegt, und daß zwischen der Tragkonstruktion und der vorderen Stirnfläche des inneren Laufringes eine Federvorspannung angeordnet ist, die in Axialrichtung der genannten Längsschubkraft entgegengerichtet ist.

Dabei kann die Federvorspannung eine Feder umfassen, die zweckmäßig ringförmig ausgebildet ist und die Welle umschließt. Die Feder kann ein konischer Ring sein und zwar von dem Typ, der häufig als "Belleville"-Feder bezeichnet wird. Diese Feder nimmt die nach vorn gerichtete Längsschubkraft nachgiebig federnd auf und entlastet so das Hauptlager.

Zwischen der genannten Feder und dem inneren Laufring des genannten Lagers kann ein weiteres Lagerelement angeordnet sein, das vorzugsweise ein Nadellager ist, dessen Nadeln radial angeordnet sind.

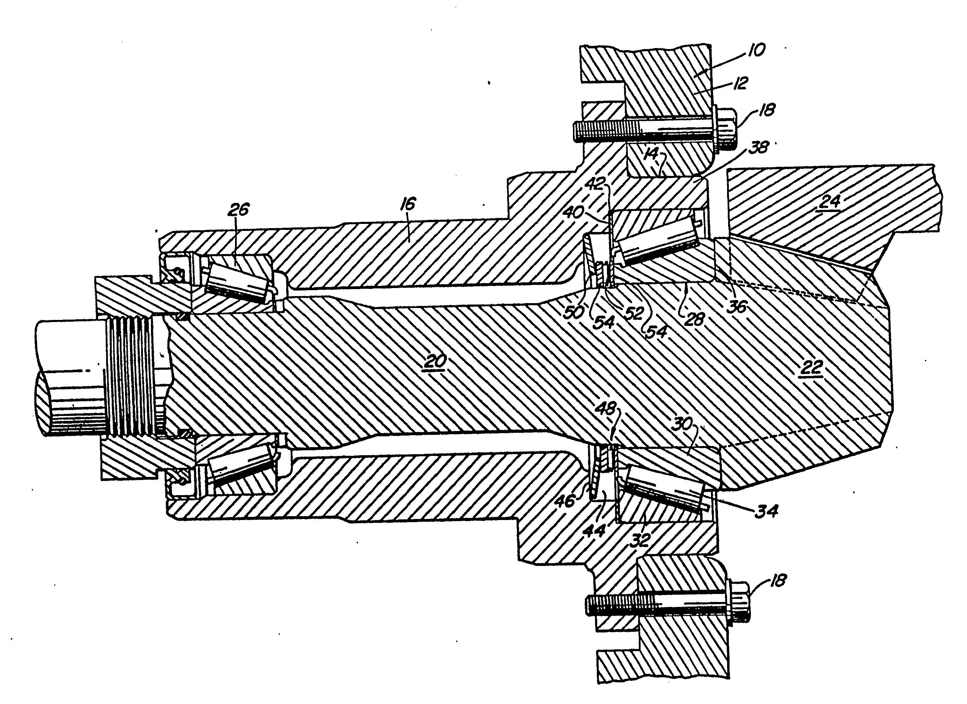

Weitere Merkmale der Erfindung sind Gegenstand der Unteransprüche und werden anhand eines Ausführungsbeispieles näher erläutert. In der Zeichnung ist eine als Beispiel dienende Ausführungsform der Erfindung im Längsschnitt dargestellt.

Aus Vereinfachungsgründen wird bei der Beschreibung davon ausgegangen, daß das linke Ende der Zeichnung zum vorderen Ende des Fahrzauges weist. Entsprechende Definitionen werden auch in den Patentansprüchen verwendet, jedoch soll die Erfindung selbstverständlich auch hiervon abweichende Anordnungen betreffen.

Die Zeichnung zeigt ein Gehäuse 10 mit einer Querwandung 12 und einer hierin vorgesehenen kreisförmigen Öffnung 14, in die das rückwärtige Ende einer Hohlwelle 16 gesteckt ist, die in üblicher Weise mit der Querwandung des genannten Gehäuses über ringförmig angeordnete Kopfschrauben 18 verbunden ist, von denen eine in der Zeichnung dargestellt ist. Innerhalb der Hohlwelle 16 ist koaxial eine sich in Längsrichtung erstreckende Ritzelwalle 20 angeordnet, die an ihrem rückwärtigen Ende ein spiralverzahntes Ritzel 22 trägt, das in üblicher Weise mit einem Spiralzahnkegelrad 22 kämmt. Für die Längslagerung der Ritzelwelle 20 innerhalb der Hohlwelle 16 sind in Längsrichtung mit Abstand voneinander angeordnete Lager 26,28 vorgesehen. Insoweit handelt es sich ume eine konventionelle Konstruktion.

Das Lager 28 kann für axiale und radiale Belastung ausgelagt sein, wobei es sich um ein Kegelrollenlager handeln kann mit einem inneren Laufring 30, einem Äußeren Laufring 32 und einer Vielzahl von dazwischen angeordneten Kegelrollen 34. Der Übergang zwischen Ritzelwelle 20 und Ritzelwelle 22 bildet eine Schulter 36, die von hinten gegen den inneren Laufring 30 anliegt. Im Bereich des Lagers 28 weist die Hohlwelle 16 einen Lagerbund 38 auf, der mit einer inneren Radialschulter 40 eine Anlage für die vordere Stirnfläche des Äußeren Laufringes 32 bildet. In einer bevorzugten Ausführungsform ist zwischen dieser Schulter 40 und dem äußeren Laufring 32 noch ein Zwischenring 42 angeordnet, dessen Dicke erst bei der Montage bestimmt wird.

Der genannte Lagerbund 38 bildet ferner einen inneren Ringraum 44 mit einer zweiten Radialschulter 46, die in lichtem Abstand vor dem inneren Laufring 30 des Lagers 28 liegt. In diesem ringförmigen Abstandsraum ist eine erfindungsgemäße Federvorspannung 48 angeordnet, die aus einer Feder 50 und einem Lager 52 geringer Reibung besteht. Die Feder 50 besteht zweckmäßig aus einem konischen Ring, der meist als "Belleville"-Feder bezeichnet wird. Das genannte Lager 52 ist ein Nadellager, dessen Nadeln radial angeordnet sind und in üblicher Weise zwischen zwei Radialringen 54 umlaufen. Der hintere der beiden Radialringe 54 liegt gegen die Stirnfläche des inneren Laufringes 30 des Lagers 28 an, während der vordere Radialring 54 als Abstützung für die Feder 50 dient, die sich auf ihrer gegenüberliegenden Seite an der Ringschulter 46 abstützt und so eine nach rückwärts wegen das Lager 28 gerichtete Kraft ausübt, die der vorstehend erläuterten, nach vorn gerichteten Längsschubkraft entgegengerichtet ist, die sich aus dem Zahneingriff zwischen Ritzel 22 und Spiralzahnkegelrad 24 ergibt.

Durch die erfindungsgemäße Anordnung einer Federvorspannung 48 können erheblich preiswertere Lager für axiale und radiale Belastung eingebaut werden, wobei die allein dadurch erzielten Einsparungen erheblich über den für die Feder 50 und das Nadellager 52 aufzubringenden Kosten liegen.

Aus der vorstehenden Beschreibung ergeben sich für einen Durchschnittsfachmann zahlreiche Möglichkeiten für Modifikationen, die jedoch alle durch die Erfindung erfaßt sein sollen.

**Patentansprüche**

1. Antriebseinrichtung bestehend aus einer Welle (20), die an ihrem einen Ende ein spiralverzahntes Ritzel (22) trägt, das mit, einem spiralzahnkegelrad (24) kämmt;
-einem Lager (28) für axiale und radiale Belastung, dessen innerer Laufring (30) fest auf der genannten Welle (20) sitzt und so die aus dem genannten Zahnradeingriff resultierende, zum anderen Ende der Welle (20) gerichtete Längsschubkraft aufnimmt wobei zwischen dem inneren Laufring (30) und einem Äußeren Laufring (32) Rollkörper (34) angeordnet sind; und aus
-einer stillstehenden Tragkonstruktion (16) zur Aufnahme des genannten Lagers (28),
dadurch gekennzeichnet, daß die Tragkonstruktion (16) mit einer Abstützung (40,42) gegen die dem Ritzel (22) abgewandte Stirnfläche (vordere Stirnfläche) des Äußeren Laufringes (32) anliegt,
und daß zwischen der Tragkonstruktion (16) und der vorderen Stirnfläche des inneren Laufringes (30) eine Federvorspannung (48) angeordnet ist, die in Axialrichtung der genannten Längsschubkraft entgegengerichtet ist. 2. Antriebseinrichtung nach Anspruch 1, dadurch gekennzeichnet, daß die genannte, gegen die vordere Stirnfläche des Äußeren Laufringes (32) anliegende Abstützung (40,42) aus einer radialen Ringschulter (40) der Tragkonstruktion (16) besteht.

3. Antriebseinrichtung nach Anspruch 2, dadurch gekennzeichnet, daß zwischen der genannten Ringschulter (40) und der vorderen Stirnfläche des Äußeren Laufringes (32) noch ein Zwischenring (42) angeordnet ist.

4. Antriebseinrichtung nach Anspruch 1, 2 oder 3, dadurch gekennzeichnet, daß sich die genannte Federvorspannung (48) einerseits an einem fest mit der Tragkonstruktion (16) verbundenen, in lichtem Abstand vor dem inneren Laufring (30) liegenden Abschnitt (46) und andererseits an der vorderen Stirnseite des inneren Laufringes (30) abstützt.

5. Antriebseinrichtung nach Anspruch 4, dadurch gekennzeichnet, daß der genannte Abschnitt (46) eine zweite Radialschulter der Tragkonstruktion (16) ist.

6. Antriebseinrisichtung nach einem der vorhergehenden Ansprüche, dadurch gekennzeichnet, daß die Federvorspannung (48) eine Feder (50) umfaßt.

7. Antriebseinrichtung nach Anspruch 6, dadurch gekennzeichnet, daß die Feder (50) ringförmig ausgebildet ist und die Welle (20) umschließt.

8. Antriebseinrichtung nach Anspruch 7, dadurch gekennzeichnet, daß die Feder (50) ein konischer Ring ist. Antriebseinrichtung nach Anspruch 6, 7 oder 8, dadurch gekennzeichnet, daß zwischen der Feder (50) und dem inneren Laufring (30) ein weiteres Lagerelement (52) angeordnet ist.

Antriebseinrichtung nach Anspruch 9, dadurch gekennzeichnet, daß das weitere Lagerelement (52) ein Nadellager mit radial angeordneten Nadeln ist.

**Claims**

1. Drive mechanism including:
- a shaft (20) having a spirally grooved pinion (22) fixed at its one end and meshing with a spiral bevel gear (24);
- a combination radial-thrust bearing (28) including an inner race ring (30) rigidly mounted on said shaft (20) so as to receive thrust forces resulting from said driving mesh and directed to the other end of the shaft (20), an outer race ring (32) and rolling elements (34) between the rings (30,32); and
- a stationary support structure (16) for supporting said bearing (28)
characterized in that the support structure (16) comprises supporting means (40 42) abutting the end plane (front) of the outer race ring (32) said front facing away from said pinion (22), and that biasing means (48) is interposed between the support structure (16) and the front of the inner race ring (30), said biasing means (16) exerting an axial force in opposition to said thrust forces. 2. The drive mechanism according to claim 1 wherein said supporting means (40 42) abutting the front of the outer race ring (32) is a radial annular shoulder (40) of the support structure (16).

3. The drive mechanism according to claim 2, wherein an annular shim pack (42) is interposed between said annular shoulder (40) and the front of the outer race ring (32).

4. The drive mechanism according to claim 1, 2 or 3, wherein said biasing means (48) acts between the front of the inner race ring (30) and a portion (46) which is fixed to the support structure (16) and spaced ahead of the front of the inner race ring (30).

5. The drive mechanism according to claim 4, wherein said portion (46) is a second radial shoulder of the support structure (16).

6. The drive mechanism according to one of the preceding claims, wherein the biasing means (48) comprises a spring (50).

7. The drive mechanism according to claim 6, wherein the spring (50) is annular and surrounds the shaft (20).

8. The drive mechanism according to claim 7 wherein the spring (50) is a conical ring.

9. The drive mechanism according to claim 6, 7 or 8, wherein further bearing means (52) is interposed between said spring (50) and the inner race ring (30).

10. The drive mechanism according to claim 8, wherein said further bearing means (52) is a needle bearing with radially arranged needles.

**Revendications**

1.- Mécanisme d'entraînement constitué par:
- un arbre (20) qui porte à l'une de ses extrémités unpignon à denture hélicoîdale (22) engrenant avec un pignon conique à denture hélicoîdale (24);
- un palier (28) pouvant supporter une charge axiale et radiale, dont la bague de roulement intérieure (30) est fixée rigidement sur l'arbre précité (20) et absorbe en conséquence la force de poussée longitudinale dirigée vers l'autre extrémité de l'arbre (20) résultant de la venue en prise précitée des pignons, des organes de roulement (34) étant disposés entre la bague de roulement intérieure (30) et la bague de roulement extérieure (32); et
- une structure porteuse fixe (16) pour la réception du palier précité (28),
caractérisé en ce que la structure porteuse (16) s'applique par un appui (40, 42) contre la face terminale opposée ou pignon (22) (face terminale avant) de la bague de roulement extérieure (32), et en ce qu'il est prévu, entre la structure porteuse (16) et la face terminale avant de la bague de roulement intérieure (30), un moyen exerçant une précontrainte élastique (48), celle-ci étant orientée dans la direction axiale à l'opposé de la force longitudinale de poussée précitée.

2.- Mécanisme d'entraînement suivant la revendication 1, caractérisé en ce que l'appui précité (40, 42), réalisé contre la face terminale avant de la bague de roulement extérieure (32) est constitué par un épauléement annulaire radial (40) de la structure porteuse (16).

3.- Mécanisme d'entraînement suivant la revendication 2, caractérisé en ce qu'une bague ou rondelle intercalaire (42) est disposée entre l'épaulement annulaire précité (40) et la face terminale avant de la bague de roulement extérieure (32).

4.- Mécanisme d'entraînement suivant la revendication 1, 2 ou 3, caractérisé en ce que le moyen précité fournissant une précontrainte élastique (48) prend appui, d'une part, sur une zone (46) reliée rigidement à la structure porteuse (16) et disposée à une certaine distance en avant de la bague de roulement intérieure (30) et, d'autre part, sur la face terminale avant de cette bague de roulement intérieure (30).

5. Mécanisme d'entraînement suivant ia revendication 4, caractérisé en ce que la zone précitée (46) est constituée par un second épaulement radial de la structure porteuse (16).

6.- Mécanisme d'entraînement suivant l'une des revendications précédentes, caractérisé en ce que le moyen exerçant une précontrainte élastique (48) comprend un ressort (50).

7.- Mécanisme d'entraînement suivant la revendication 6, caractérisé en ce que le ressort (50) a une forme annulaire et entoure l'arbre (20). cation 7, caractérisé en ce que le ressort (50) est formé par une bague conique.

9.- Mécanisme d'entraînement suivant la revendication 6, 7 ou 8, caractérisé en ce qu'un autre élément formant palier (52) est disposé entre le ressort (50) et la bague de roulement intérieure (30). cation 9, caractérisé en ce que cet autre élément formant palier (52) est constitué par un roulement à aiguilles comportant des aiguilles disposées radialement.